# EUROPÄISCHE PATENTSCHRIFT

(11) **EP 3 094 522 B1**
(45) Veröffentlichungstag und Bekanntmachung des Hinweises auf die Patenterteilung: **21.06.2017**
(21) Anmeldenummer: 15781582.0
(22) Anmeldetag: 17.10.2015
(51) Int. Cl.: B60R 11/02

(54) **VERFAHREN ZUM BETREIBEN EINER AUFNAHMEVORRICHTUNG, AUFNAHMEVORRICHTUNG UND KRAFTWAGEN MIT EINER AUFNAHMEVORRICHTUNG**
METHOD FOR OPERATING A CRADLE, CRADLE AND VEHICLE WITH A CRADLE
PROCÉDÉ DE FONCTIONNEMENT D'UN BERCEAU, BERCEAU ET VÉHICULE AVEC UN BERCEAU

(30) Priorität: 03.11.2014 DE 102014016434
(43) Veröffentlichungstag der Anmeldung: 23.11.2016
(73) Patentinhaber: Audi AG, 85045 Ingolstadt (DE)
(72) Erfinder: HELOT, Jacques, 85051 Ingolstadt (DE); WEIß, Ulrich, 85092 Kösching (DE); REDEKER, Immo, 85049 Ingolstadt (DE)
(86) Internationale Anmeldenummer: PCT/EP2015/002055
(87) Internationale Veröffentlichungsnummer: WO 2016/070955

(56) Entgegenhaltungen:
- DE-A1-102011 109 056
- US-A1- 2006 277 555
- US-A1- 2010 124 005
- US-A1- 2014 223 065

## Beschreibung

Die Erfindung betrifft ein Verfahren zum Betreiben einer Aufnahmevorrichtung der im Oberbegriff des Patentanspruchs 1 angegebenen Art. Des Weiteren betrifft die Erfindung eine Aufnahmevorrichtung der im Oberbegriff des Patentanspruchs 3 angegebenen Art. Ferner betrifft die Erfindung einen Kraftwagen mit einer derartigen Aufnahmevorrichtung. Die US2014/223065 A1 offenbart ein Verfahren nach dem Oberbegriff von Anspruch 1 sowie eine Vorrichtung nach dem Oberbegriff von Anspruch 3. Der Einsatz von mobilen Endgeräten, wie beispielsweise Smartphones, Tabletcomputer und dergleichen, in Kraftfahrzeugen nimmt an Bedeutung zu. Um einen Datenaustausch zwischen derartigen mobilen Endgeräten und Kraftfahrzeugen zu ermöglichen, ist es allgemein bekannt, sogenannte Koppelboxen innerhalb des Kraftfahrzeugs vorzusehen, in denen beispielsweise ein Smartphone positioniert und mittels eines Kabels aufgeladen werden kann. Nachteilig hierbei ist, dass das mobile Endgerät dabei nicht innerhalb des Kraftfahrzeugs fixiert wird. Es liegt beispielsweise in einem Fach und kann insbesondere bei einer sportlichen Fahrweise hin und her rutschen. Darüber hinaus ist es auch erforderlich, das mobile Endgerät zum Laden mit einem Kabel zu verbinden, welches mit einer Energiequelle des Kraftfahrzeugs gekoppelt ist. Das wiederum erfordert zusätzliche Handlungen seitens der Fahrzeuginsassen. Darüber hinaus sind derartige Fächer nicht auf das jeweilige Format der verwendeten mobilen Endgeräte zugeschnitten und in derartigen Fächern angeordnete Kabel vermitteln auch keinen besonders aufgeräumten Eindruck.

Die DE 10 2005 021 105 A1 zeigt eine Halterungsvorrichtung zur Befestigung eines Mobiltelefons oder eines mobilen Computergeräts in einem Fahrzeug. Die Halterungsvorrichtung zur Befestigung eines Mobiltelefons und/oder eines mobilen Computergeräts in einem Fahrzeug umfasst eine Rahmeneinrichtung, in welcher das Mobiltelefon und/oder das mobile Computergerät einfügbar ist und die das Mobiltelefon und/oder das mobile Computergerät an dessen Außenumfang vollständig umgibt. Des Weiteren umfasst die Halterungsvorrichtung eine Einzugsautomatik, mittels welcher nach einem Einführen des Mobiltelefons und/oder des mobilen Computergeräts dieses in eine Aktivierungsposition im Inneren der Halterungsvorrichtung platziert wird.

Die DE 10 141 190 A1 zeigt eine in einem Fahrzeug angeordnete Dockingstation, welche in einer Konsole des Fahrzeugs integriert ist. Die Dockingstation weist einen Einschubrahmen zur Aufnahme eines mobilen Endgerätes auf.

Die DE 19 957 252 A1 zeigt ein elektronisches Einbaugerät für ein Kraftfahrzeug, welches mehrere elektronische Baugruppen aufweist, wobei zumindest eine der elektronischen Baugruppen von außen zugänglich und austauschbar ist. Dies wird dadurch realisiert, dass das Gehäuse des elektronischen Einbaugeräts eine Aussparung mit zumindest einem von außen zugänglichen Einschub umfasst.

Die DE 19 907 003 A1 zeigt eine Systembox für den Einsatz in Kraftfahrzeugen. Die Systembox umfasst verschiedene Systemfächer zur Aufnahme von einzelnen Funktionseinheiten, wie beispielsweise eines Computerlaptops, eines Druckers, eines Scanners sowie weiterer Büromittel.

Es ist die Aufgabe der vorliegenden Erfindung, eine verbesserte Aufnahme zumindest eines mobilen Endgeräts in einem Kraftfahrzeug zu ermöglichen.

Diese Aufgabe wird durch ein Verfahren zum Betreiben einer Aufnahmevorrichtung, durch eine Aufnahmevorrichtung sowie durch einen Kraftwagen mit einer Aufnahmevorrichtung mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem Verfahren zum Betreiben einer Aufnahmevorrichtung für wenigstens ein mobiles Endgerät wird ermittelt, ob das mobile Endgerät in einen Aufnahmeschacht eines Kraftfahrzeugbauteils eingeführt wird. Falls das mobile Endgerät in den Aufnahmeschacht eingefügt wird, wird eine Antriebseinrichtung mittels einer Steuereinrichtung derart angesteuert, dass das mobile Endgerät mittels der Antriebseinrichtung in eine Verstauposition bewegt wird, in welcher das mobile Endgerät zumindest teilweise in dem Aufnahmeschacht versenkt und verliersicher gehalten ist. Das erfindungsgemäße Verfahren zeichnet sich dabei dadurch aus, dass, falls ein vorbestimmter Fahrzeugzustand erfasst worden ist, die Antriebseinrichtung mittels der Steuereinrichtung derart angesteuert wird, dass das mobile Endgerät mittels der Antriebseinrichtung von der Verstauposition in eine Entnahmeposition bewegt wird, in welcher das mobile Endgerät weiter aus dem Aufnahmeschacht ragt als in der Verstauposition.

Durch die Lösung wird also ein mobiles Endgerät nicht nur sicher innerhalb eines Kraftfahrzeugs verstaut, sondern es wird auch eine Möglichkeit bereitgestellt, einen Fahrzeuginsassen durch automatisches Bewegen des mobilen Endgeräts aus dem Aufnahmeschacht in eine Entnahmeposition daran zu erinnern, das mobile Endgerät auch wieder beim Verlassen des Kraftfahrzeugs mitzunehmen. Das mobile Endgerät wird also automatisch in die Verstauposition bewegt, sobald dieses in den Aufnahmeschacht eingeführt wird. Zum Beispiel kann die Antriebseinrichtung zum Einziehen des mobilen Endgeräts in den Aufnahmeschacht bis in die Verstauposition direkt dann angesteuert werden, sobald erfasst wird, dass das mobile Endgerät bereichsweise in den Aufnahmeschacht eingeführt worden ist. Dies kann beispielsweise mittels einer Lichtschranke erfasst werden. Alternativ ist es auch möglich, dass die Antriebseinrichtung erst dann zum Einziehen des mobilen Endgerätes in den Aufnahmeschacht bis in die Verstauposition aktiviert wird, wenn das mobile Endgerät an einen mit einem Sensor versehenen Anschlag im Inneren des Aufnahmeschachts bewegt worden ist.

In der Verstauposition wird das mobile Endgerät verliersicher, also am Kraftfahrzeug fixiert, gehalten. Eine unerwünschte Bewegung des mobilen Endgeräts oder gar ein Herausbewegen aus dem Aufnahmeschacht wird somit verhindert. Das mobile Endgerät ist in der Verstauposition in alle drei Raumrichtungen fixiert, kann also nicht mehr translatorisch bewegt werden. Rotationsbewegungen sind in der Verstauposition ebenfalls nicht möglich.

Ferner wird das mobile Endgerät - sobald der zumindest eine vorbestimmte Fahrzeugzustand erfasst worden ist - automatisch aus der im Aufnahmeschacht versenkten und darin fixierten Verstauposition in die Entnahmeposition bewegt. In der Entnahmeposition ist das mobile Endgerät zumindest in einer vorgegebenen Entnahmerichtung - beispielsweise in Fahrzeughochrichtung - nicht mehr fahrzeugseitig fixiert, sodass das mobile Endgerät von einem Fahrzeuginsassen aus dem Aufnahmeschacht entnommen werden kann. Dabei kann das mobile Endgerät entweder tatsächlich lose in der Entnahmeposition angeordnet sein. Alternativ kann das mobile Endgerät noch mittels entsprechend dafür ausgebildeten Haltemitteln noch mit einer definierten Kraft gehalten werden, welche allerdings so gering eingestellt ist, dass das mobile Endgerät ohne große Kraftanstrengungen eines Fahrzeuginsassen aus dem Aufnahmeschacht entnommen werden kann. Das mobile Endgerät wird also nicht nur automatisch in den Aufnahmeschacht bewegt, sondern es wird auch wieder automatisch - also ohne eine dafür erforderlich Bedienhandlung eines Fahrzeuginsassen -aus dem Aufnahmeschacht, zumindest teilweise bis die Entnahmeposition erreicht ist, herausbewegt.

In vorteilhafter Ausgestaltung der Erfindung ist es vorgesehen, dass das mobile Endgerät von der Verstauposition in die Entnahmeposition bewegt wird, sobald eine Fahrzeugtür geöffnet wird und/oder eine Zündung des Kraftfahrzeugs deaktiviert worden ist. Dadurch kann auf einfache Weise darauf geschlossen werden, ob ein Fahrzeuginsasse oder auch mehrere Fahrzeuginsassen das Kraftfahrzeug höchstwahrscheinlich gerade verlassen wollen, so dass das mobile Endgerät zum entsprechend richtigen Zeitpunkt mittels der Antriebseinrichtung von der Verstauposition wieder in die Entnahmeposition bewegt wird, wodurch ein Fahrzeuginsasse oder auch weitere Fahrzeuginsassen auf effektive Weise darauf hingewiesen werden, ihr mobiles Endgerät beim Verlassen des Kraftfahrzeugs auch wieder mitzunehmen.

Eine weitere vorteilhafte Ausführungsform der Erfindung sieht vor, dass die Steuereinrichtung eine Anzeigeeinrichtung des Kraftfahrzeugs zum Anzeigen einer auf das Entnehmen des mobilen Endgeräts hinweisenden Mitteilung ansteuert, sobald der vorbestimmte Fahrzeugzustand erfasst worden ist. Dadurch werden Fahrzeuginsassen auf einfache Weise darüber informiert beziehungsweise daran erinnert, das in dem Aufnahmeschacht positionierte mobile Endgerät beim Verlassen des Kraftfahrzeugs auch mitzunehmen und nicht in dem Kraftfahrzeug zu vergessen. Alternativ oder zusätzlich kann es auch vorgesehen sein, dass die Steuereinrichtung einen Aktuator zum Aufbringen eines vorgegebenen Widerstands auf zumindest eine Fahrzeugtür entgegen ihrer Öffnungsrichtung ansteuert, falls das mobile Endgerät nach dem Erfassen des vorbestimmten Fahrzeugzustands noch nicht aus dem Aufnahmeschacht entnommen worden ist. Dadurch können Fahrzeuginsassen ebenfalls darauf hingewiesen beziehungsweise daran erinnert werden, ihr mobiles Endgerät beim Verlassen des Kraftfahrzeugs auch wieder mitzunehmen. Des auf die Fahrzeugtür aufgebrachte Widerstand wird aufgehoben, sobald erfasst worden ist, dass das mobile Endgerät auf dem Aufnahmeschacht entnommen worden ist.

In weiterer vorteilhafter Ausgestaltung der Erfindung ist es vorgesehen, dass zumindest eine Schnittstelle, insbesondere eine Ladeschnittstelle zum Aufladen des mobilen Endgeräts und/oder eine Datenschnittstelle zum Verbinden des mobilen Endgeräts mit dem Kraftfahrzeug, mit zumindest einer korrespondierenden Schnittstelle des mobilen Endgeräts verbunden, also gekoppelt, wird, sobald das mobile Endgerät in der Verstauposition angeordnet worden ist. Mit anderen Worten ist die Steuereinrichtung dazu ausgebildet, eine Zuführeinrichtung derart anzusteuern, dass zumindest eine fahrzeugseitige Schnittstelle, zum Beispiel ein Ladekabel zum Aufladen des mobilen Endgeräts und/oder ein Datenkabel zum Verbinden des mobilen Endgeräts mit dem Kraftfahrzeug, an zumindest eine korrespondierende Schnittstelle des mobilen Endgeräts herangeführt und mit dieser verbunden wird, sobald erfasst worden ist, dass das mobile Endgerät in der Verstauposition angeordnet worden ist. Manuelle Handlungen seitens der Fahrzeuginsassen zum Aufladen und gegebenenfalls auch zum Verbinden des mobilen Endgeräts mit dem Kraftfahrzeug können somit entfallen, da dies vollautomatisch geschieht, sobald das mobile Endgerät mittels der Antriebseinrichtung in die Verstauposition verbracht worden ist.

Gemäß einer weiteren vorteilhaften Ausführungsform der Erfindung ist es vorgesehen, dass die Steuereinrichtung dazu ausgebildet ist, eine Verschlusseinrichtung derart anzusteuern, dass mittels der Verschlusseinrichtung der Aufnahmeschacht verschlossen wird, sobald erfasst worden ist, dass das mobile Endgerät in der Verstauposition vollständig in dem Aufnahmeschacht versenkt worden ist. Dadurch kann das mobile Endgerät innerhalb des Aufnahmeschachts besonders verliersicher aufgenommen werden. Alternativ oder zusätzlich ist es auch möglich, dass die Aufnahmevorrichtung verstellbare Arretiermittel aufweist, welche zum sicheren Halten beziehungsweise Fixieren des mobilen Endgeräts an dieses angelegt werden, sobald das mobile Endgerät in der Verstauposition angeordnet worden ist. Beispielsweise kann die Antriebseinrichtung derart ausgebildet sein, dass entsprechende Antriebsmittel sowohl zum Bewegen des mobilen Endgeräts als auch zum sicheren Halten des mobilen Endgeräts ausgelegt sind. Dadurch kann ebenfalls sichergestellt werden, dass das mobile Endgerät sicher in seiner Verstauposition gehalten wird.

Die erfindungsgemäße Aufnahmevorrichtung für zumindest ein mobiles Endgerät umfasst einen in einem Kraftfahrzeugbauteil ausgebildeten Aufnahmeschacht zum Aufnehmen des mobilen Endgeräts. Des Weiteren umfasst die Aufnahmevorrichtung eine Erfassungseinrichtung, welche dazu ausgebildet ist, zu ermitteln, ob das mobile Endgerät in den Aufnahmeschacht eingeführt wird. Zudem weist die Aufnahmevorrichtung eine Antriebseinrichtung auf, mittels welcher das mobile Endgerät in eine zumindest teilweise in dem Aufnahmeschacht versenkte Verstauposition bewegbar ist, in welcher das mobile Endgerät verliersicher gehalten ist. Darüber hinaus umfasst die Aufnahmevorrichtung eine Steuereinrichtung, welche dazu ausgebildet ist, die Antriebseinrichtung derart anzusteuern, dass das mobile Endgerät mittels der Antriebseinrichtung in eine Verstauposition bewegt wird, in welcher das mobile Endgerät zumindest teilweise in dem Aufnahmeschacht versenkt und verliersicher gehalten ist, falls das mobile Endgerät in den Aufnahmeschacht eingeführt wird. Die Aufnahmevorrichtung zeichnet sich dabei dadurch aus, dass die Steuereinrichtung dazu ausgebildet ist, die Antriebseinrichtung derart anzusteuern, dass das mobile Endgerät mittels der Antriebseinrichtung von der Verstauposition in eine Entnahmeposition bewegt wird, in welcher das mobile Endgerät weiter aus dem Aufnahmeschacht ragt als in der Verstauposition, falls ein vorbestimmter Fahrzeugzustand erfasst worden ist. Vorteilhafte Ausgestaltungen des Verfahrens sind als vorteilhafte Ausgestaltungen der erfindungsgemäßen Aufnahmevorrichtung anzusehen, wobei die Aufnahmevorrichtung insbesondere Mittel zur Durchführung der Verfahrensschritte aufweist.
In vorteilhafter Ausgestaltung der Aufnahmevorrichtung ist es vorgesehen, dass innerhalb des Aufnahmeschachts zumindest eine Schnittstelle, insbesondere eine Ladeschnittstelle zum Aufladen des mobilen Endgeräts und/oder eine Datenschnittstelle zum Verbinden des mobilen Endgeräts mit dem Kraftfahrzeug, derart angeordnet ist, dass die Schnittstelle mit einer korrespondierenden Schnittstelle des mobilen Endgeräts gekoppelt ist, wenn das mobile Endgerät in der Verstauposition angeordnet ist. Mit anderen Worten wird das mobile Endgerät mit seiner entsprechenden Schnittstelle automatisch mit der fahrzeugseitigen Schnittstelle gekoppelt, sobald das mobile Endgerät in der Verstauposition angeordnet ist. Es erfolgt somit eine automatische Kopplung des mobilen Endgeräts mit zumindest einer entsprechenden fahrzeugseitigen Schnittstelle, sobald das Endgerät in der Verstauposition angeordnet ist. Die Fahrzeuginsassen müssen somit keine manuelle Kopplung des mobilen Endgeräts mit beispielsweise Ladekabeln oder Datenkabeln vornehmen.

Eine weitere vorteilhafte Ausgestaltung der Aufnahmevorrichtung sieht vor, dass die Aufnahmevorrichtung ein zum Aufnehmen des mobilen Endgeräts ausgebildetes Aufnahmeelement umfasst, welches mittels der Antriebseinrichtung zwischen der Entnahmeposition und der Verstauposition bewegbar ist. Mittels eines derartigen Aufnahmeelements kann das Endgerät sowohl in der Entnahmeposition als auch in der Verstauposition besonders verliersicher gehalten und mittels der Antriebseinrichtung entsprechend bewegt werden.

Eine weitere vorteilhafte Ausführungsform der Aufnahmevorrichtung sieht vor, dass die Antriebseinrichtung eine Mehrzahl von in dem Aufnahmeschacht gegenüberliegend voneinander angeordnete Rollen aufweist, mittels welchen das mobile Endgerät zwischen der Entnahmeposition und der Verstauposition bewegbar ist. Vorzugsweise sind die Rollen gummiert oder mit einem Schaumstoff umgeben, so dass das mobile Endgerät nicht beschädigt wird. Mittels der Rollen kann das mobile Endgerät besonders einfach zwischen der Entnahmeposition und der Verstauposition hin und her bewegt werden.

Des Weiteren kann die Aufnahmevorrichtung eine Verstelleinrichtung aufweisen, mittels welcher die Aufnahmevorrichtung für unterschiedlich dimensionierte Endgeräte anpassbar ist. Die Verstelleinrichtung kann beispielsweise in den Aufnahmeschacht integriert sein, so dass mittels der Verstelleinrichtung die Breite, Länge und/oder Höhe des Aufnahmeschachts an jeweilige Abmaße unterschiedlicher mobiler Endgeräte angepasst werden kann. Die Verstelleinrichtung kann beispielsweise auch einen Federmechanismus umfassen, sodass mittels des Federmechanismus auf einfache Weise eine einfache Anpassung an unterschiedliche Größen von mobilen Endgeräten erfolgen kann.

Alternativ oder zusätzlich kann der Aufnahmeschacht so groß dimensioniert sein, dass mehrere mobile Endgeräte gleichzeitig verliersicher in dem Aufnahmeschacht positionierbar sind. Der Aufnahmeschacht kann beispielsweise auch so groß dimensioniert sein, dass sowohl ein Smartphone als auch ein Tabletcomputer zumindest einzeln in dem Aufnahmeschacht Platz finden. Sowohl durch die entsprechend große Dimensionierung des Aufnahmeschachts als auch durch das Vorsehen einer Verstelleinrichtung kann die Aufnahmevorrichtung besonders variabel für unterschiedlichste mobile Endgeräte verwendet werden.

Der erfindungsgemäße Kraftwagen umfasst die erfindungsgemäße Aufnahmevorrichtung oder eine vorteilhafte Ausführungsform der erfindungsgemäßen Aufnahmevorrichtung.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs mit einer Aufnahmevorrichtung für zumindest ein mobiles Endgerät;
- Fig. 2: eine Perspektivansicht auf eine erste Ausführungsform der Aufnahmevorrichtung, wobei die Aufnahmevorrichtung in drei unterschiedlichen Zuständen dargestellt ist, in welchen zum einen ein Smartphone gerade in einen Aufnahmeschacht der Aufnahmevorrichtung eingeführt wird, dann mittels einer dort nicht dargestellten Antriebseinrichtung in den Aufnahmeschacht versenkt und anschließend in eine vollständig versenkte Verstauposition bewegt wird;
- Fig. 3: eine teilweise geschnittene Seitenansicht der Aufnahmevorrichtung, wobei eine erste Ausführungsform einer möglichen Antriebseinrichtung zum Bewegen des Smartphones dargestellt und das Smartphone einmal in seiner Verstauposition und einmal in seiner Entnahmeposition gezeigt ist;
- Fig.4: eine schematische Seitenansicht einer alternativen Ausführungsform der Antriebseinrichtung, wobei die Antriebseinrichtung eine Mehrzahl von Rollen zum Bewegen des Smartphones aufweist;
- Fig. 5: eine geschnittene Draufsicht auf die Antriebseinrichtung mit den mehreren Rollen, wobei das Smartphone wiederum beim Einführen in den Aufnahmeschacht, beim Bewegen hinein in den Aufnahmeschacht und in seiner Verstauposition dargestellt ist;
- Fig. 6: eine Perspektivansicht auf eine Fahrzeugtür, wobei in der hier gezeigten Ausführungsform der Aufnahmevorrichtung der Aufnahmeschacht in der Fahrzeugtür integriert ist;
- Fig. 7: eine Schnittdarstellung der in Fig. 6 gezeigten Aufnahmevorrichtung, wobei das Smartphone wiederum beim Einführen in den Aufnahmeschacht, beim Bewegen in den Aufnahmeschacht hinein und seiner Verstauposition gezeigt ist;
- Fig. 8: eine mögliche Anordnung von zwei Smartphones in zwei Aufnahmeschächten der Aufnahmevorrichtung; und
- Fig. 9: eine Perspektivansicht auf einen Mitteltunnel eines Kraftfahrzeugs, wobei mehrere Aufnahmeschächte innerhalb des Mitteltunnels vorgesehen sind, in welchen jeweilige Smartphones angeordnet sind.

In den Figuren werden gleiche oder funktionsgleiche Elemente mit gleichen Bezugszeichen versehen.

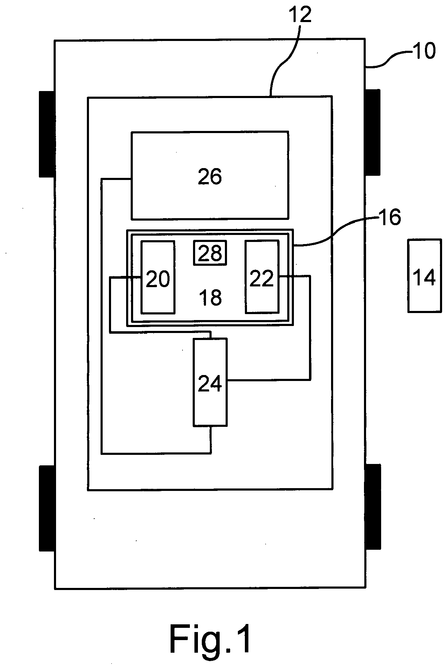

Ein Kraftwagen 10 ist in einer schematischen Darstellung in Fig. 1 gezeigt. Der Kraftwagen 10 umfasst eine Aufnahmevorrichtung 12 für zumindest ein mobiles Endgerät 14, wobei die Aufnahmevorrichtung 12 einen in einem Kraftfahrzeugbauteil 16 ausgebildeten Aufnahmeschacht 18 zum Aufnehmen des mobilen Endgeräts 14 aufweist. Bei dem mobilen Endgerät kann es sich beispielsweise um ein Smartphone oder auch um einen Tabletcomputer handeln. Darüber hinaus umfasst die Aufnahmevorrichtung 12 eine Erfassungseinrichtung 20, welche dazu ausgebildet ist, zu ermitteln, ob das mobile Endgerät 14 gerade in den Aufnahmeschacht 18 eingeführt wird.

Des Weiteren weist die Aufnahmevorrichtung 12 eine Antriebseinrichtung 22 auf, mittels welcher das mobile Endgerät 14 in eine zumindest teilweise in dem Aufnahmeschacht 18 versenkte Verstauposition bewegbar ist, in welcher das mobile Endgerät 14 verliersicher gehalten ist. Darüber hinaus umfasst die Aufnahmevorrichtung 12 eine Steuereinrichtung 24, welche dazu ausgebildet ist, die Antriebseinrichtung 22 derart anzusteuern, dass das mobile Endgerät 14 mittels der Antriebseinrichtung 22 in die Verstauposition bewegt wird, falls das mobile Endgerät 14 in den Aufnahmeschacht 18 eingeführt wird. Darüber hinaus ist die Steuereinrichtung 24 dazu ausgebildet, die Antriebseinrichtung 22 derart anzusteuern, dass das mobile Endgerät 14 mittels der Antriebseinrichtung 22 von der Verstauposition wiederum in eine Entnahmeposition bewegt wird, in welcher das mobile Endgerät 14 weiter aus dem Aufnahmeschacht 18 ragt als in der Verstauposition, falls ein vorbestimmter Fahrzeugzustand erfasst worden ist.

Vorzugsweise wird das mobile Endgerät 14 von der Verstauposition in die Entnahmeposition bewegt, sobald eine Fahrzeugtür geöffnet wird und/oder eine Zündung des Kraftfahrzeugs deaktiviert worden ist. Ein Fahrzeuginsasse, der zuvor sein mobiles Endgerät 14 in dem Aufnahmeschacht 18 verliersicher verstaut hatte, wird dadurch auf einfache Weise noch vor dem Verlassen des Kraftfahrzeugs 10 daran erinnert, sein mobiles Endgerät 14 auch mitzunehmen, bevor er das Kraftfahrzeug 10 verlässt.

Um einen Fahrzeuginsassen an das Mitnehmen seines mobilen Endgeräts 14 beim Verlassen des Kraftfahrzeugs zu erinnern, kann es darüber hinaus vorgesehen sein, dass die Steuereinrichtung 24 eine hier nicht gezeigte Anzeigeeinrichtung des Kraftfahrzeugs 10, beispielsweise ein Zentraldisplay oberhalb einer Mittelkonsole, zum Anzeigen einer auf das Entnehmen des mobilen Endgeräts hinweisenden Mitteilung ansteuert, sobald der vorbestimmte Fahrzeugzustand erfasst worden ist. Beispielsweise wird auf der Anzeigeeinrichtung eine Mitteilung angezeigt, dass sich das mobile Endgerät 14 nach wie vor noch in dem Aufnahmeschacht 18 befindet. Alternativ oder zusätzlich kann es auch vorgesehen sein, dass eine akustische Mitteilung ausgesendet wird, mittels welcher der Fahrzeuginsasse darauf hingewiesen wird, dass sich das mobile Endgerät 14 noch nach wie vor im Aufnahmeschacht 18 befindet.

Zusätzlich oder alternativ kann es auch noch vorgesehen sein, dass die Steuereinrichtung 24 einen Aktuator zum Aufbringen eines vorgegebenen Widerstands auf zumindest eine Fahrzeugtür entgegen ihrer Öffnungsrichtung ansteuert, falls das mobile Endgerät 14 nach dem Erfassen des vorbestimmten Fahrzeugzustands noch nicht aus dem Aufnahmeschacht 18 entnommen worden ist. Dies dient ebenfalls als Hinweis beziehungsweise Erinnerung an einen Fahrzeuginsassen, dass er sein mobiles Endgerät 14 nicht in dem Kraftfahrzeug 10 vergessen soll.

Darüber hinaus kann die Aufnahmevorrichtung 12 noch eine Verschlusseinrichtung 26 aufweisen, wobei die Steuereinrichtung 24 dazu ausgebildet ist, die Verschlusseinrichtung 26 derart anzusteuern, dass mittels der Verschlusseinrichtung der Aufnahmeschacht 18 verschlossen wird, sobald erfasst worden ist, dass das mobile Endgerät 14 in der Verstauposition vollständig in dem Aufnahmeschacht 18 versenkt angeordnet worden ist.

Innerhalb des Aufnahmeschachts 18 kann zudem zumindest eine Schnittstelle 28, insbesondere eine Ladeschnittstelle zum Aufladen des mobilen Endgeräts 14 und/oder eine Datenschnittstelle zum Verbinden des mobilen Endgeräts 14 mit dem Kraftfahrzeug 10, derart angeordnet sein, dass die Schnittstelle 28 mit einer korrespondierenden Schnittstelle des mobilen Endgeräts 14 gekoppelt ist, wenn das mobile Endgerät 14 in der Verstauposition innerhalb des Aufnahmeschachts 18 angeordnet ist. Ein Fahrzeuginsasse braucht also weder ein Ladekabel noch ein Datenkabel an das mobile Endgerät 14 anzuschließen, da das mobile Endgerät 14 automatisch mit einer derartigen Schnittstelle verbunden ist, sobald das mobile Endgerät 14 in die Verstauposition verbracht worden ist.

Alternativ ist es auch möglich, dass die Schnittstelle 28 mit zumindest einer korrespondierenden Schnittstelle des mobilen Endgeräts 14 verbunden wird, sobald das mobile Endgerät 14 in der Verstauposition angeordnet worden ist. Beispielsweise kann die Steuereinrichtung 24 dazu ausgebildet sein, eine entsprechend dafür ausgelegte Zuführeinrichtung derart anzusteuern, dass die fahrzeugseitige Schnittstelle 28 an eine korrespondierende Schnittstelle des mobilen Endgeräts 14 herangeführt und mit dieser verbunden wird, sobald erfasst worden ist, dass das mobile Endgerät 14 in der Verstauposition angeordnet worden ist.

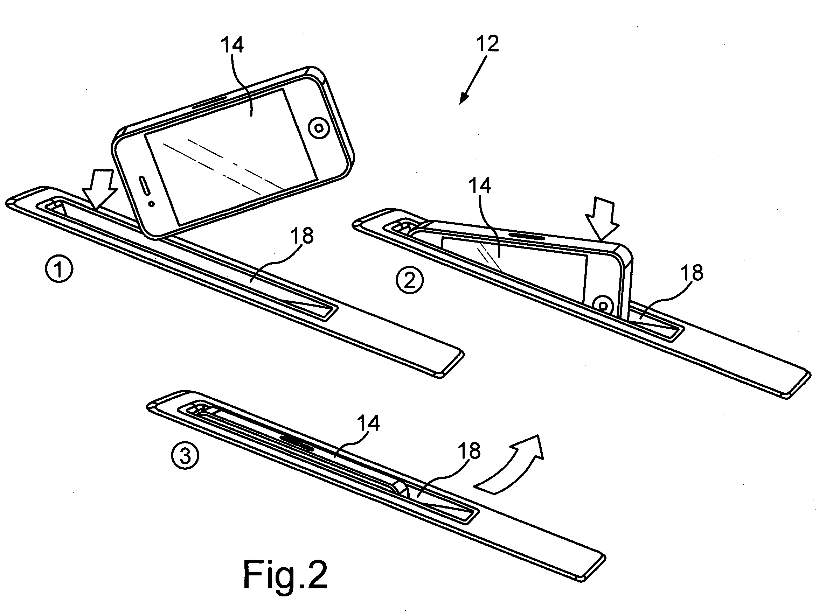

In Fig. 2 ist eine erste mögliche Ausführungsform der Aufnahmevorrichtung 10 schematisch dargestellt. Dabei sind drei unterschiedliche Zustände 1, 2, und 3, gemäß welchen das mobile Endgerät 14, bei welchem es sich vorliegend um ein Smartphone handelt, gegenüber der Aufnahmevorrichtung 10 positioniert werden kann. Mit 1 ist eine Entnahmeposition, mit 2 ein Zustand, während das mobile Endgerät 14 in den Aufnahmeschacht 18 mittels der Antriebseinrichtung 22 bewegt wird, und mit 3 ist eine Verstauposition des mobilen Endgeräts innerhalb des Aufnahmeschachts 18 gekennzeichnet. Diese Kennzeichnungen mit 1, 2 und 3 sind auch in den nachfolgenden Figuren gültig. In Fig. 2 ist allerdings die Entnahmeposition 1 nicht ganz korrekt dargestellt. Hier führt ein Fahrzeuginsasse gerade das mobile Endgerät 14 erst in den Aufnahmeschacht 18 ein.

Zunächst führt ein Fahrzeuginsasse das mobile Endgerät 14 in den Schacht 18 ein, wobei mittels der in Fig. 1 schematisch dargestellten Erfassungseinrichtung 20 erfasst wird, dass das mobile Endgerät 14 gerade in den Aufnahmeschacht 18 eingeführt wird. Mittels der Antriebseinrichtung 22 wird das mobile Endgerät 14 sodann in den Schacht 18 hineingezogen beziehungsweise hineinbewegt, bis das mobile Endgerät 14 vollständig in dem Aufnahmeschacht 18 in seine Verstauposition versenkt worden ist. Sobald eine Fahrzeugtür geöffnet wird und/oder eine Zündung des Kraftfahrzeugs 10 deaktiviert worden ist, wird das mobile Endgerät 14 wiederum automatisch aus der Verstauposition in die mit der Nummer 3 gekennzeichnete Entnahmeposition bewegt.

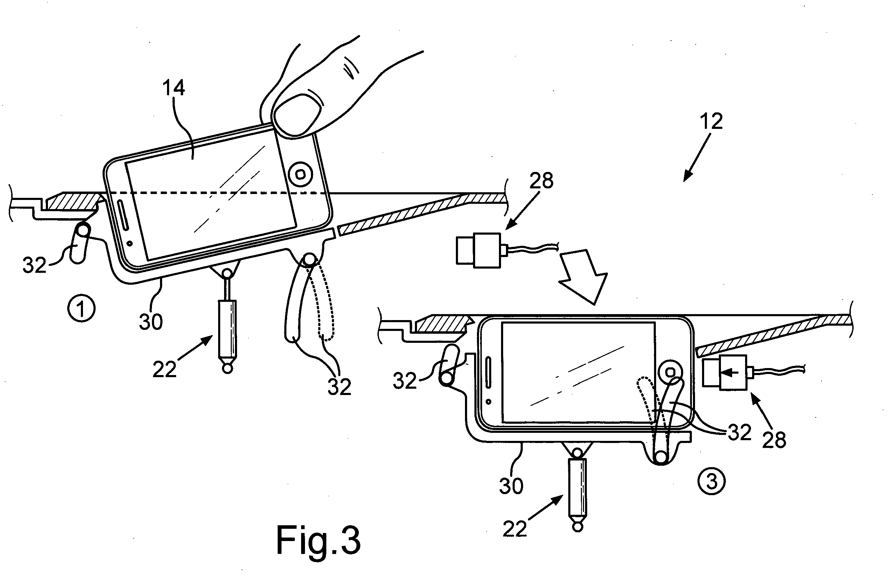

In Fig. 3 ist der in Fig. 2 dargestellte Ablauf in einer teilweise geschnittenen Ansicht gezeigt. Wie zu erkennen, umfasst die Aufnahmevorrichtung 10 in der hier gezeigten Ausführungsform ein zum Aufnehmen des mobilen Endgeräts 14 ausgebildetes im Wesentlichen L-förmig ausgebildetes Aufnahmeelement 30. In der hier gezeigten Ausführungsform kann es beispielsweise vorgesehen sein, dass das mobile Endgerät 14 erst dann in die Verstauposition bewegt wird, sobald das mobile Endgerät 14 bündig auf dem Aufnahmeelement 30 positioniert worden ist. Dafür kann beispielsweise ein hier nicht gezeigter Sensor an dem Aufnahmeelement 30 angeordnet ist, mittels welchem erfasst werden kann, dass das mobile Endgerät 14 gerade in den Aufnahmeschacht 18 eingeführt und auf dem Aufnahmeelement 30 positioniert worden ist.

Die Verstelleinrichtung 22 ist vorliegend als eine Art Hubzylinder ausgebildet, mittels welchem das mobile Endgerät 14 in die Verstauposition bewegt werden kann. Um eine geführte Bewegung des Aufnahmeelements 30 und somit auch des mobilen Endgeräts 14 zu ermöglichen, weist die Aufnahmevorrichtung 10 eine Kulissenführung 32 auf, entlang welcher die Bewegung des Aufnahmeelements 30 von der Entnahmeposition in die Verstauposition und umgekehrt geführt wird.

Im vorliegend in Fig. 3 gezeigten Ausführungsbeispiel wird das mobile Endgerät 14 also quer eingelegt, so dass sich eine hier nicht näher bezeichnete Schnittstelle des mobilen Endgeräts 14 in der vorliegenden Darstellung rechts befindet. Sobald das mobile Endgerät 14 in die Verstauposition bewegt worden ist, wird die Schnittstelle 28, bei welcher es sich vorliegend um ein kombiniertes Daten- und Ladekabel handelt, an das mobile Endgerät 14 herangeführt und mit der Schnittstelle des mobilen Endgeräts 14 verbunden.

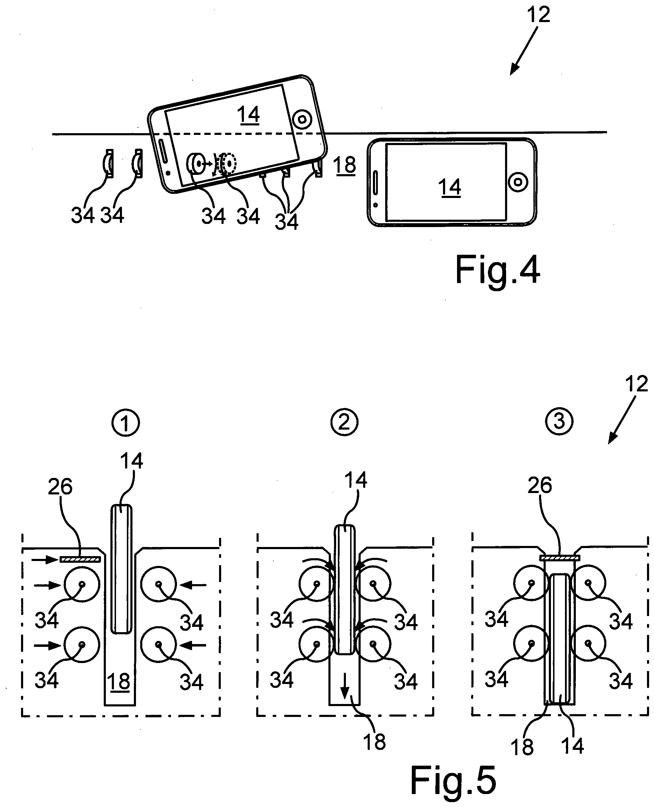

In Fig. 4 ist eine weitere alternative Ausführungsform der Aufnahmevorrichtung 12 gezeigt. Vorliegend ist der Aufnahmeschacht 18 so groß dimensioniert, dass zwei mobile Endgeräte 14in dem Aufnahmeschacht 18 gleichzeitig Platz finden. Vorliegend sind jeweils an gegenüberliegenden Seiten des Aufnahmeschachts 18 angeordnete Rollen 34 zu erkennen, mittels welchen die mobilen Endgeräte 14zwischen der Entnahmeposition und der Verstauposition bewegbar sind.

In Fig. 5 ist die in Fig. 4 dargestellte Ausführungsform der Aufnahmevorrichtung 12 in einer geschnittenen Draufsicht gezeigt, wobei eines der beiden mobilen Endgerät 14 einmal ganz links in der Entnahmeposition, in der Mitte während des Verfahrens des mobilen Endgeräts 14 in die Verstauposition und ganz rechts in seiner Verstauposition dargestellt ist. Die Rollen 34 können beispielsweise derart angeordnet und gelagert sein, dass diese in Richtung des Aufnahmeschachts 18 hinein und aus diesem heraus bewegt werden können, und zwar quer zum mobilen Endgerät 14.

Sobald erfasst worden ist, dass das mobile Endgerät 14 in den Aufnahmeschacht hinein bewegt wird, kann die Steuereinrichtung 24 einen entsprechenden Verstellmechanismus ansteuern, so dass die Rollen 34 auf das mobile Endgerät 14 hinzu bewegt werden, bis diese Rollen 34 an dem mobilen Endgerät 14 anliegen. Anschließend steuert die Steuereinrichtung 24 die Rollen 34 derart an, dass diese das mobile Endgerät 14 aus der Entnahmeposition in die Verstauposition, also in den Aufnahmeschacht 18 bewegen. Den Rollen 34 kann somit eine Doppelfunktion zukommen, nämlich zum einen zum Bewegen des mobilen Endgeräts 14 und zum anderen zum Fixieren des mobilen Endgeräts 14. Im vorliegend gezeigten Ausführungsbeispiel wird das mobile Endgerät 14 vollständig in dem Aufnahmeschacht 18 versenkt. Sobald das mobile Endgerät 14 vollständig in dem Aufnahmeschacht 18 versenkt, also in seine Verstauposition, verbracht worden ist, wird die Verschlusseinrichtung 26 derart betätigt, dass sie den Aufnahmeschacht 18 vollständig verschließt und somit ein unbeabsichtigtes Herausbewegen beziehungsweise Herausfallen des mobilen Endgeräts 14 aus dem Aufnahmeschacht 18 sicher verhindert.

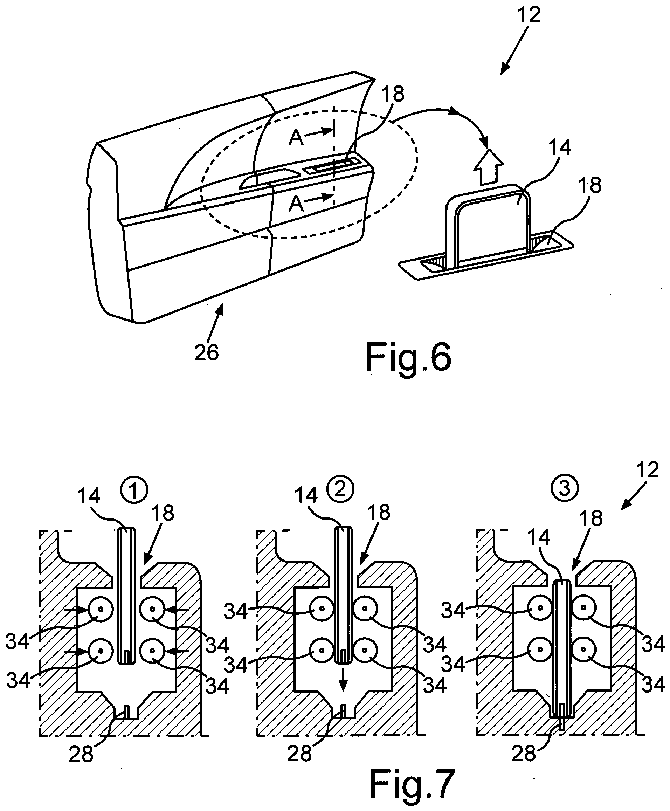

In Fig. 6 ist eine weitere alternative Ausführungsform der Aufnahmevorrichtung 12 gezeigt. Vorliegend ist der Aufnahmeschacht 18 in eine Fahrzeugtür 36 integriert, so dass das mobile Endgerät 14 innerhalb der Fahrzeugtür versenkt werden kann.

In Fig. 7 ist die in Fig. 6 gezeigte Ausführungsform der Aufnahmevorrichtung 12 in drei Schnittdarstellungen gezeigt, wobei das mobile Endgerät 14 wiederum in der Entnahmeposition, während des Bewegens in die Verstauposition und in der Verstauposition gezeigt ist. Wie zu erkennen, ist der Aufnahmeschacht 18 vorliegend sowohl an seiner Oberseite als auch an seiner Unterseite trichterförmig ausgebildet, was dazu beiträgt, dass das mobile Endgerät 14 besonders exakt innerhalb des Aufnahmeschachts 18 positioniert werden kann. Vorliegend weist die hier nicht näher gekennzeichnete Antriebseinrichtung 22 wieder eine Mehrzahl von Rollen 34 auf, mittels welchen das mobile Endgerät 14 zwischen der Entnahmeposition und der Verstauposition hin und her bewegt werden kann. Wie zu erkennen, ist die Schnittstelle 28 derart innerhalb des Aufnahmeschachts 18 positioniert, dass das mobile Endgerät 14 automatisch in seiner Verstauposition mit der Schnittstelle 28 gekoppelt ist.

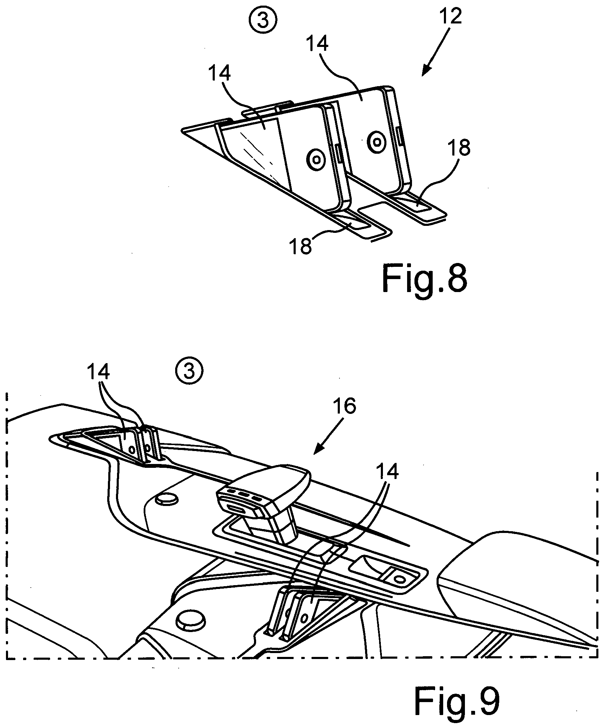

In Fig. 8 ist eine weitere alternative Ausführungsform der Aufnahmevorrichtung 12 gezeigt, wobei hier zwei mobile Endgeräte 14 in ihrer Verstauposition gezeigt sind. Vorliegend ist die Verstauposition also derart gewählt, dass die mobilen Endgeräte 14 haifischflossenartig aus dem Aufnahmeschacht 18 hervorstehen. Der Aufnahmeschacht 18 kann in Kombination mit den mobilen Endgeräten 14 also auch als eine Art designtechnisches Element innerhalb des Fahrzeuginnenraums eingesetzt werden.

In Fig. 9 ist ein Mitteltunnel 38 teilweise in einer Perspektivansicht gezeigt. Wie vorliegend zu erkennen, sind eine Vielzahl der mobilen Endgeräte 14 in entsprechend hier nicht näher bezeichneten Aufnahmeschächten 18 angeordnet. Die hier gezeigten mobilen Endgeräte 14 ragen ebenfalls in ihrer Verstauposition haifischflossenartig aus ihren jeweiligen Aufnahmeschächten 18 heraus. Die Aufnahmeschächte 18 dienen somit also ebenfalls als eine Art gestalterisches Element innerhalb des Kraftfahrzeuginnenraums.

## Patentansprüche

1. Verfahren zum Betreiben einer Aufnahmevorrichtung (12) für wenigstens ein mobiles Endgerät (14), mit den Schritten:
- Ermitteln, ob das mobile Endgerät (14) in einen Aufnahmeschacht (18) eines Kraftfahrzeugbauteils (16) eingeführt wird;
- falls das mobile Endgerät (14) in den Aufnahmeschacht (18) eingeführt wird: Ansteuern einer Antriebseinrichtung (22) mittels einer Steuereinrichtung (24) derart, dass das mobile Endgerät (14) mittels der Antriebseinrichtung (22) in eine Verstauposition (3) bewegt wird, in welcher das mobile Endgerät (14) zumindest teilweise in dem Aufnahmeschacht (18) versenkt und verliersicher gehalten ist;
- falls ein vorbestimmter Fahrzeugzustand erfasst worden ist: Ansteuern der Antriebseinrichtung (22) mittels der Steuereinrichtung (24) derart, dass das mobile Endgerät (14) mittels der Antriebseinrichtung (22) von der Verstauposition (3) in eine Entnahmeposition (1) bewegt wird, in welcher das mobile Endgerät weiter aus dem Aufnahmeschacht ragt (18) als in der Verstauposition (3);
**dadurch gekennzeichnet, dass**
- das mobile Endgerät (14) von der Verstauposition (3) in die Entnahmeposition (1) bewegt wird, sobald eine Fahrzeugtür geöffnet wird und/oder eine Zündung des Kraftfahrzeugs (10) deaktiviert worden ist;
- und/oder die Steuereinrichtung (24) eine Anzeigeeinrichtung des Kraftfahrzeugs (10) zum Anzeigen einer auf das Entnehmen des mobilen Endgeräts (14) hinweisenden Mitteilung ansteuert, sobald der vorbestimmte Fahrzeugzustand erfasst worden ist;
- und/oder die Steuereinrichtung (24) eine Verschlusseinrichtung (26) derart ansteuert, dass mittels der Verschlusseinrichtung (26) der Aufnahmeschacht (18) verschlossen wird, sobald erfasst worden ist, dass das mobile Endgerät (14) in der Verstauposition (3) vollständig in dem Aufnahmeschacht (18) versenkt angeordnet worden ist.

2. Verfahren nach Anspruch 1,
**dadurch gekennzeichnet, dass**
zumindest eine Schnittstelle (28), insbesondere eine Ladeschnittstelle zum Aufladen des mobilen Endgeräts (14) und/oder eine Datenschnittstelle zum Verbinden des mobilen Endgeräts (14) mit dem Kraftfahrzeug (10), mit zumindest einer korrespondierenden Schnittstelle des mobilen Endgeräts (14) verbunden wird, sobald das mobile Endgerät (14) in der Verstauposition (3) angeordnet worden ist.

3. Aufnahmevorrichtung (12) für zumindest ein mobiles Endgerät (14), mit
- einem in einem Kraftfahrzeugbauteil (16) ausgebildeten Aufnahmeschacht (18) zum Aufnehmen des mobilen Endgeräts (14)
- einer Erfassungseinrichtung (20), welche dazu ausgebildet ist, zu ermitteln, ob das mobile Endgerät (14) in den Aufnahmeschacht (18) eingeführt wird;
- einer Antriebseinrichtung (22), mittels welcher das mobile Endgerät in eine zumindest teilweise in dem Aufnahmeschacht (18) versenkte Verstauposition (3) bewegbar ist, in welcher das mobile Endgerät (14) verliersicher gehalten ist;
- einer Steuereinrichtung (24), welche dazu ausgebildet ist, die Antriebseinrichtung (22) derart anzusteuern, dass das mobile Endgerät (14) mittels der Antriebseinrichtung (22) in die Verstauposition (3) bewegt wird, falls das mobile Endgerät (14) in den Aufnahmeschacht (18) eingeführt wird;
- wobei die Steuereinrichtung (24) dazu ausgebildet ist, die Antriebseinrichtung (22) derart anzusteuern, dass das mobile Endgerät (14) mittels der Antriebseinrichtung (22) von der Verstauposition (3) in eine Entnahmeposition (1) bewegt wird, in welcher das mobile Endgerät (14) weiter aus dem Aufnahmeschacht (18) ragt als in der Verstauposition (3), falls ein vorbestimmter Fahrzeugzustand erfasst worden ist;
**dadurch gekennzeichnet, dass**
- die Steuereinrichtung (24) dazu ausgebildet ist, die Antriebseinrichtung (22) derart anzusteuern, dass das mobile Endgerät (14) von der Verstauposition (3) in die Entnahmeposition (1) bewegt wird, sobald eine Fahrzeugtür geöffnet wird und/oder eine Zündung des Kraftfahrzeugs (10) deaktiviert worden ist;
- und/oder die Steuereinrichtung (24) dazu ausgebildet ist, eine Anzeigeeinrichtung des Kraftfahrzeugs (10) zum Anzeigen einer auf das Entnehmen des mobilen Endgeräts (14) hinweisenden Mitteilung anzusteuern, sobald der vorbestimmte Fahrzeugzustand erfasst worden ist;
- und/oder die Steuereinrichtung (24) dazu ausgebildet ist, eine Verschlusseinrichtung (26) derart anzusteuern, dass mittels der Verschlusseinrichtung (26) der Aufnahmeschacht (18) verschlossen wird, sobald erfasst worden ist, dass das mobile Endgerät (14) in der Verstauposition (3) vollständig in dem Aufnahmeschacht (18) versenkt angeordnet worden ist.

4. Aufnahmevorrichtung (12) nach Anspruch 3,
**dadurch gekennzeichnet, dass**
innerhalb des Aufnahmeschachts (18) zumindest eine Schnittstelle (28), insbesondere eine Ladeschnittstelle zum Aufladen des mobilen Endgeräts (14) und/oder eine Datenschnittstelle zum Verbinden des mobilen Endgeräts (14) mit dem Kraftfahrzeug (10), derart angeordnet ist, dass die Schnittstelle (28) mit einer korrespondierenden Schnittstelle des mobilen Endgeräts (14) gekoppelt ist, wenn das mobile Endgerät (14) in der Verstauposition (3) angeordnet ist.

5. Aufnahmevorrichtung (12) nach Anspruch 3 oder 4,
**dadurch gekennzeichnet, dass**
die Aufnahmevorrichtung (12) ein zum Aufnehmen des mobilen Endgeräts (14) ausgebildetes Aufnahmeelement (30) umfasst, welches mittels der Antriebseinrichtung (22) zwischen der Entnahmeposition (1) und der Verstauposition (3) bewegbar ist.

6. Aufnahmevorrichtung (12) nach einem der Ansprüche 3 bis 5,
**dadurch gekennzeichnet, dass**
die Antriebseinrichtung (22) eine Mehrzahl von in dem Aufnahmeschacht (18) gegenüberliegend voneinander angeordnete Rollen (34) aufweist, mittels welchen das mobile Endgerät (14) zwischen der Entnahmeposition (1) und der Verstauposition (3) bewegbar ist.

7. Kraftfahrzeug (10) mit einer Aufnahmevorrichtung (12) nach einem der Ansprüche 3 bis 6.

## Claims

1. Method for operating a receiving device (12) for at least one mobile terminal (14), having the steps of:
- determining whether the mobile terminal (14) is introduced into a receiving duct (18) of a motor vehicle component (16);
- if the mobile terminal (14) is introduced into the receiving duct (18): controlling a drive device (22) by means of a control device (24) in such a manner that the mobile terminal (14) is moved by means of the drive device (22) into a stow position (3), in which the mobile terminal (14) is at least partially recessed in the receiving duct (18) and retained in a non-releasable manner;
- if a predetermined vehicle state has been detected: controlling the drive device (22) by means of the control device (24) in such a manner that the mobile terminal (14) is moved by means of the drive device (22) from the stow position (3) into a removal position (1) in which the mobile terminal protrudes further from the receiving duct (18) than in the stow position (3);
**characterised in that**
- the mobile terminal (14) is moved from the stow position (3) into the removal position (1) as soon as a vehicle door has been opened and/or an ignition of the motor vehicle (10) has been deactivated;
- and/or the control device (24) controls a display device of the motor vehicle (10) for displaying a communication which indicates the removal of the mobile terminal (14) as soon as the predetermined vehicle state has been detected;
- and/or the control device (24) controls a closure device (26) in such a manner that, by means of the closure device (26), the receiving duct (18) is closed as soon as it has been detected that the mobile terminal (14) in the stow position (3) has been arranged so as to be completely recessed in the receiving duct (18).

2. Method according to claim 1,
**characterised in that**
at least one interface (28), in particular a charging interface for charging the mobile terminal (14) and/or a data interface for connecting the mobile terminal (14) to the motor vehicle (10), is connected to at least one corresponding interface of the mobile terminal (14) as soon as the mobile terminal (14) has been arranged in the stow position (3).

3. Receiving device (12) for at least one mobile terminal (14) having
- a receiving duct (18) configured in a motor vehicle component (16) for receiving the mobile terminal (14);
- a detection device (20) configured to determine whether the mobile terminal (14) is introduced into the receiving duct (18);
- a drive device (22), by means of which the mobile terminal can be moved into a stow position (3) which is at least partially recessed in the receiving duct (18) and in which the mobile terminal (14) is retained in a non-releasable manner;
- a control device (24) which is configured to control the drive device (22) in such a manner that the mobile terminal (14) is moved by means of the drive device (22) into the stow position (3) if the mobile terminal (14) is introduced into the receiving duct (18);
- wherein the control device (24) is configured to control the drive device (22) in such a manner that the mobile terminal (14) is moved by means of the drive device (22) from the stow position (3) into a removal position (1) in which the mobile terminal (14) protrudes further from the receiving duct (18) than in the stow position (3) if a predetermined vehicle state has been detected;
**characterised in that**
- the control device (24) is configured to control the drive device (22) in such a manner that the mobile terminal (14) is moved from the stow position (3) into the removal position (1) as soon as a vehicle door is opened and/or an ignition of the motor vehicle (10) has been deactivated;
- and/or the control device (24) is configured to control a display device of the motor vehicle (10) to display a communication which indicates the removal of the mobile terminal (14) as soon as the predetermined vehicle state has been detected;
- and/or the control device (24) is configured to control a closure device (26) in such a manner that, by means of the closure device (26), the receiving duct (18) is closed as soon as it has been detected that the mobile terminal (14) in the stow position (3) has been arranged so as to be completely recessed in the receiving duct (18).

4. Receiving device (12) according to claim 3,
**characterised in that**
there is arranged inside the receiving duct (18) at least one interface (28), in particular a charging interface for charging the mobile terminal (14) and/or a data interface for connecting the mobile terminal (14) to the motor vehicle (10) in such a manner that the interface (28) is coupled to a corresponding interface of the mobile terminal (14) when the mobile terminal (14) is arranged in the stow position (3).

5. Receiving device (12) according to claim 3 or 4,
**characterised in that**
the receiving device (12) comprises a receiving element (30) which is configured to receive the mobile terminal (14) and which can be moved between the removal position (1) and the stow position (3) by means of the drive device (22).

6. Receiving device (12) according to any one of claims 3 to 5,
**characterised in that**
the drive device (22) has a plurality of rollers (34) which are arranged opposite each other in the receiving duct (18) and by means of which the mobile terminal (14) can be moved between the removal position (1) and the stow position (3).

7. Motor vehicle (10) having a receiving device (12) according to any one of claims 3 to 6.

## Revendications

1. Procédé de fonctionnement d'un dispositif de logement (12) pour au moins un terminal mobile (14), avec les étapes suivantes consistant à :
- déterminer si le terminal mobile (14) est introduit dans un logement (18) d'une pièce de véhicule automobile (16) ;
- si le terminal mobile (14) est introduit dans le logement (18) : commander un dispositif d'entraînement (22) au moyen d'un dispositif de commande (24) de telle sorte que le terminal mobile (14) est déplacé au moyen du dispositif d'entraînement (22) dans une position de rangement (3) dans laquelle le terminal mobile (14) est enfoncé au moins partiellement dans le logement (18) et est maintenu de manière imperdable ;
- si un état de véhicule prédéterminé a été détecté : commander le dispositif d'entraînement (22) au moyen du dispositif de commande (24) de telle sorte que le terminal mobile (14) est déplacé au moyen du dispositif d'entraînement (22) de la position de rangement (3) dans une position d'enlèvement (1) dans laquelle le terminal mobile dépasse plus hors du logement (18) que dans la position de rangement (3) ;
**caractérisé en ce que**
- le terminal mobile (14) est déplacé de la position de rangement (3) dans la position d'enlèvement (1) dès qu'une portière de véhicule est ouverte et/ou qu'un allumage du véhicule automobile (10) a été désactivé ;
- et/ou le dispositif de commande (24) commande un dispositif d'affichage du véhicule automobile (10) pour afficher une notification indiquant l'enlèvement du terminal mobile (14) dès que l'état de véhicule prédéterminé a été détecté ;
- et/ou le dispositif de commande (24) commande un dispositif de fermeture (26) de telle sorte que le logement (18) est fermé au moyen du dispositif de fermeture (26) dès qu'il a été détecté que le terminal mobile (14) a été placé complètement enfoncé dans le logement (18) dans la position de rangement (3).

2. Procédé selon la revendication 1,
**caractérisé en ce que**
au moins une interface (28), en particulier une interface de chargement pour charger le terminal mobile (14) et/ou une interface de données pour relier le terminal mobile (14) au véhicule automobile (10), est reliée à au moins une interface correspondante du terminal mobile (14) dès que le terminal mobile (14) a été placé dans la position de rangement (3).

3. Dispositif de logement (12) pour au moins un terminal mobile (14), avec
- un logement (18), conçu dans une pièce de véhicule automobile (16), pour loger le terminal mobile (14)
- un dispositif de détection (20) qui est conçu pour déterminer si le terminal mobile (14) est introduit dans le logement (18) ;
- un dispositif d'entraînement (22) au moyen duquel le terminal mobile peut être déplacé dans une position de rangement (3) enfoncée au moins partiellement dans le logement (18), dans laquelle le terminal mobile (14) est maintenu de manière imperdable ;
- un dispositif de commande (24) qui est conçu pour commander le dispositif d'entraînement (22) de telle sorte que le terminal mobile (14) est déplacé dans la position de rangement (3) au moyen du dispositif d'entraînement (22), si le terminal mobile (14) est introduit dans le logement (18) ;
- le dispositif de commande (24) étant conçu pour commander le dispositif d'entraînement (22) de telle sorte que le terminal mobile (14) est déplacé au moyen du dispositif d'entraînement (22) de la position de rangement (3) dans une position d'enlèvement (1) dans laquelle le terminal mobile (14) dépasse plus hors du logement (18) que dans la position de rangement (3), si un état de véhicule prédéterminé a été détecté ;
**caractérisé en ce que**
- le dispositif de commande (24) est conçu pour commander le dispositif d'entraînement (22) de telle sorte que le terminal mobile (14) est déplacé de la position de rangement (3) dans la position d'enlèvement (1) dès qu'une portière de véhicule est ouverte et/ou qu'un allumage du véhicule automobile (10) a été désactivé ;
- et/ou le dispositif de commande (24) est conçu pour commander un dispositif d'affichage du véhicule automobile (10) pour afficher une notification indiquant l'enlèvement du terminal mobile (14) dès que l'état de véhicule prédéterminé a été détecté ;
- et/ou le dispositif de commande (24) est conçu pour commander un dispositif de fermeture (26) de telle sorte que le logement (18) est fermé au moyen du dispositif de fermeture (26) dès qu'il a été détecté que le terminal mobile (14) a été placé complètement enfoncé dans le logement (18) dans la position de rangement (3).

4. Dispositif de logement (12) selon la revendication 3,
**caractérisé en ce que**
à l'intérieur du logement (18), au moins une interface (28), en particulier une interface de chargement pour charger le terminal mobile (14) et/ou une interface de données pour relier le terminal mobile (14) au véhicule automobile (10), est placée de telle sorte que l'interface (28) est couplée à une interface correspondante du terminal mobile (14) lorsque le terminal mobile (14) est placé dans la position de rangement (3).

5. Dispositif de logement (12) selon la revendication 3 ou 4,
**caractérisé en ce que**
le dispositif de logement (12) comprend un élément de logement (30) qui est conçu pour loger le terminal mobile (14) et qui peut être déplacé au moyen du dispositif d'entraînement (22) entre la position d'enlèvement (1) et la position de rangement (3).

6. Dispositif de logement (12) selon l'une des revendications 3 à 5,
**caractérisé en ce que**
le dispositif d'entraînement (22) présente une pluralité de galets (34) qui sont placés les uns en face des autres dans le logement (18) et au moyen desquels le terminal mobile (14) peut être déplacé entre la position d'enlèvement (1) et la position de rangement (3).

7. Véhicule automobile (10) avec un dispositif de logement (12) selon l'une des revendications 3 à 6.
